# EUROPEAN PATENT SPECIFICATION

(11) **EP 0 879 755 B1**
(45) Date of publication and mention of the grant of the patent: **28.07.2004**
(21) Application number: 98109166.3
(22) Date of filing: 20.05.1998
(51) Int. Cl.: B62J 39/00, B62K 11/00, B62K 19/40

(54) **A battery supporting apparatus for motorcycles**
Batteriehalterung für Motorrad
Dispositif pour supporter des batteries pour motocyclette

(30) Priority: 22.05.1997 JP 13225597
(43) Date of publication of application: 25.11.1998
(73) Proprietor: SUZUKI MOTOR CORPORATION, Shizuoka-ken (JP)
(72) Inventor: Kinoshita, Ryoichi, Hamana-gun, Shizuoka-ken (JP)
(74) Representative: Luderschmidt, Schüler & Partner GbR

(56) References cited:
- FR-A- 2 761 332
- US-A- 4 388 979
- US-A- 4 537 273
- US-A- 4 666 009
- PATENT ABSTRACTS OF JAPAN vol. 018, no. 637 (M-1716), 5 December 1994 (1994-12-05) & JP 06 247365 A (SUZUKI MOTOR CORP), 6 September 1994 (1994-09-06)
- PATENT ABSTRACTS OF JAPAN vol. 010, no. 265 (M-515), 10 September 1986 (1986-09-10) & JP 61 089145 A (HONDA MOTOR CO LTD), 7 May 1986 (1986-05-07)
- PATENT ABSTRACTS OF JAPAN vol. 015, no. 212 (M-1118), 30 May 1991 (1991-05-30) & JP 03 057786 A (SUZUKI MOTOR CORP), 13 March 1991 (1991-03-13)

## Description

### Background of the invention

### (1) Field of the invention

The present invention relates to a motorcycle comprising a battery supporting apparatus.

### (2) Description of the Prior Art

A battery for motorcycles are mostly arranged immediately under the seat, but sometimes it is arranged below a swing arm, as shown in Japanese Patent Application Laid-Open Hei 1 No. 212683.

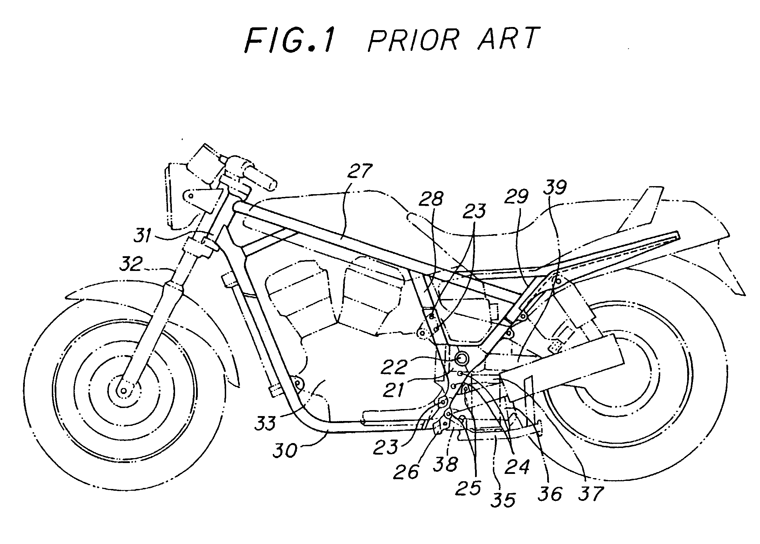

The construction thereof will now be described with reference to FIG. 1.

In FIG. 1, the left and right lower metal fittings 21 are fabricated by forging which are separated into front and back parts, designating a spindle hole as a split face, and subsequently welded together to form a roughly Y-shape. An engine-coupling boss 23, a step-mounting boss 24, and a battery holder-mounting boss 25 are integrally formed to the lower metal fittings 21, and machined into screws, respectively. Moreover, a kickstand bracket 26 is welded thereto. To the left and the right lower metal fittings 21, lower ends of front pipes 28 welded to a main pipe 7 are inserted into and welded to the upper ends thereof, and front ends of the back pipes 29 are inserted into and welded to the upper ends thereof. In addition, the back ends of down pipes 30 are inserted into and welded to the lower ends thereof. The front ends of the main pipe 27 and the down pipes 30 are coupled to a head pipe 31. To the head pipe 31 is attached a telescopic front fork 32. To the boss 23 is axially mounted an engine case 33. To the boss 24 is axially mounted a step. To the boss 25 is attached a battery holder 36 mounted with a main stand 35, and a battery 37 is placed in the battery holder 36. To the bracket 26 is axially mounted a side stand 38. To the spindle hole 22, a back fork 39 (swing arm) is axially mounted with a spindle. One example of the conventional motorcycle is as described above.

However, when a fuel tank is installed immediately under the seat, or when a muffler chamber is arranged beneath the swing arm, with the battery position, sometimes the capacity of the fuel tank and the muffler chamber could not be secured sufficiently.

US-A-4 666 009 describes a motorcycle comprising a cradle type frame receiving an engine not shown. The battery holder is arranged between the lower and upper parts of the left and right down pipes of the frame between left and right plates, however, these plates are not the plates for suspending the not shown engine.

### SUMMARY OF THE INVENTION

The present invention has been devised in view of the above problems. It is the object of the present invention, therefore, to provide a motocycle in which the capacity of the fuel tank and the like can be sufficiently secured, as well as the workability of the battery maintenance can be improved, in accordance with claim 1.

In accordance with the first aspect of the invention, the battery supporting apparatus is arranged on the top of an oil filter element which projects forward from the lower part of the engine case. By arranging the battery holder on the top of the oil filter element, the maintenance of the oil filter element is made possible without detaching the battery holder.

In accordance with a second aspect of the invention, the battery supporting apparatus comprises the battery holder arranged in front of a starter motor located on the front part of the engine case. By arranging the battery holder in front of the starter motor, the starter motor is protected from pebbles or the like kicked up by the front wheel.

Furthermore, in accordance with a further aspect of the invention, the battery supporting apparatus comprises a detachable lid arranged on the front face of the battery holder.

By detaching the lid by utilizing a space between the lid and a front fender, attaching and changing the battery in the battery holder, as well as the inspection work can be easily and conveniently performed.

### BRIEF DESCRIPTION OF THE DRAWINGS

FIG. 1 is a general side view of one example of the conventional motorcycle.
FIG. 2 is a general side view of the motorcycle according to the embodiment of the present invention.
FIG. 3 is a side view showing the lower part of the down pipe of a motorcycle.
FIG. 4 is a perspective view showing the main part of the present embodiment.

### DESCRIPTION OF THE PREFERRED EMBODIMENTS

The embodiment of the present invention will now be described with reference to the accompanying drawings.

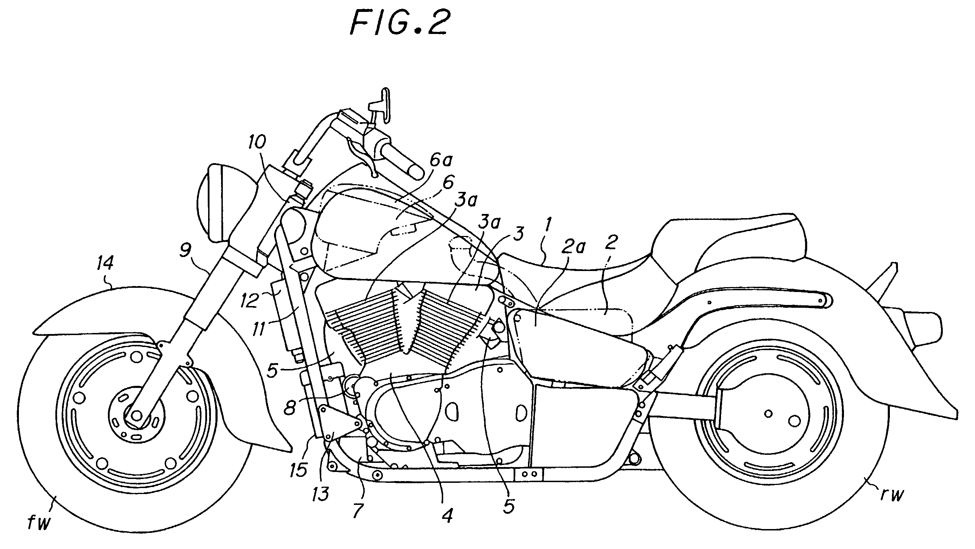

FIG. 2 - FIG. 4 are views for explaining the battery supporting apparatus for motorcycles according to this embodiment. FIG. 2 is a general side view of the motorcycle, and numeral 1 denotes a saddle-type seat, and a fuel tank 2 is installed immediately under the seat 1, located in front of a rear wheel rw, and a V-type two-cylinder engine 3 is installed in front of the fuel tank 2.

In addition, in front of the seat 1 is arranged a teardrop-type (seen from the side) cover 6a on which meters are installed, which is also a cover for an air cleaner case 6 described later. Moreover, a cover 2a is arranged on the outer side of the fuel tank 2 so that it overlies the fuel tank 2, when being seen from the side, thus the fuel tank 2 cannot be seen from outside.

Each cylinder 3a, 3a of the engine 3 is mounted on the upper portion of the engine case 4, and exhaust pipes 5, 5 are connected from the front and the back of cylinders 3a, 3a which are around the engine 3 (from outside of the engine).

Furthermore, a carburetor (not shown) is arranged inside opposite to the side where the exhaust pipes 5, 5 of respective cylinders 3a, 3a of the engine are mounted.

The air cleaner case 6 is installed on the upper portion of the engine 3, a cartridge-type oil filter element 7 having a roughly cylindrical appearance projects forward from the lower part of the front portion of the engine case 4, as well as a starter motor 8 is arranged in the front portion of the engine case 4.

Furthermore, in the body frame, a pair of right and left down pipes (frames) 11 hang from a head pipe 10 to which a telescopic front fork 9 for axially supporting the front wheel is attached, and the down pipes 11 extend backward, going round the lower part of the engine case 4.

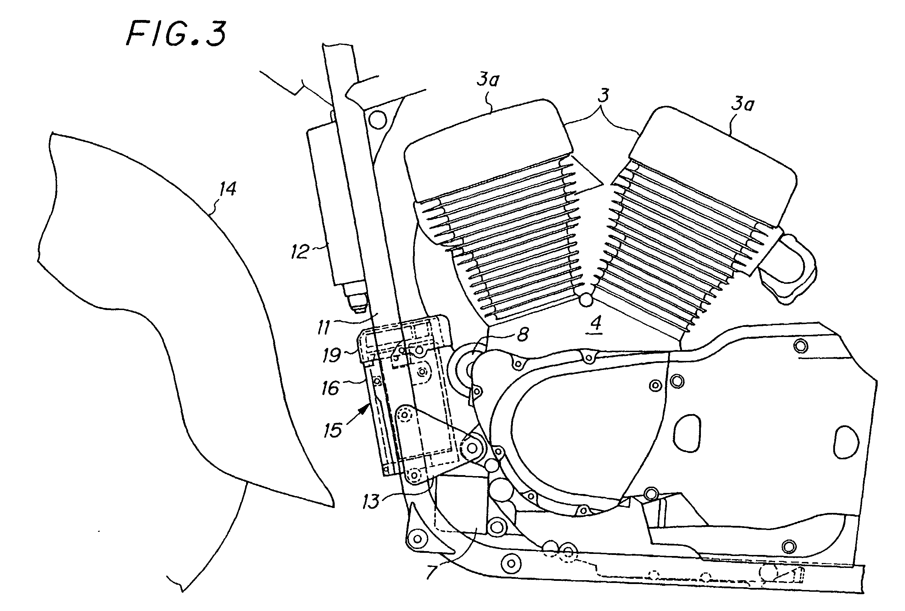

As shown also in FIG. 3, the down pipes 11 hang in front of the engine 3 and the engine case 4, and reach the lower part of the engine case 4. A radiator 12 is arranged on the upper part of the down pipes 11, as well as right and left engine-suspending plates 13L, 13R are fixed on the lower part of the down pipes 11. Numeral 14 denotes a front fender.

A box-shaped battery holder 15 corresponding to the battery shape is arranged, located between lower parts of a pair of right and left down pipes 11 and backward of the front fender 14. As the position of the battery holder 15, as in the invention of the aspect 2, it is preferred to be in front of the starter motor 8, and moreover as in the invention of the aspect 3 or 4, it is preferred to be on the top of the oil filter element 7.

In this case, as the material of the battery holder 15, it may be any material so far as it has a proper rigidity and durability, such as a material fabricated and formed from a metal plate, for example, a steel plate.

As the shape of the battery holder 15, it has only to correspond to the battery shape, and it may have an optional shape such as a rectangular shape or a cylindrical shape, according to the battery shape.

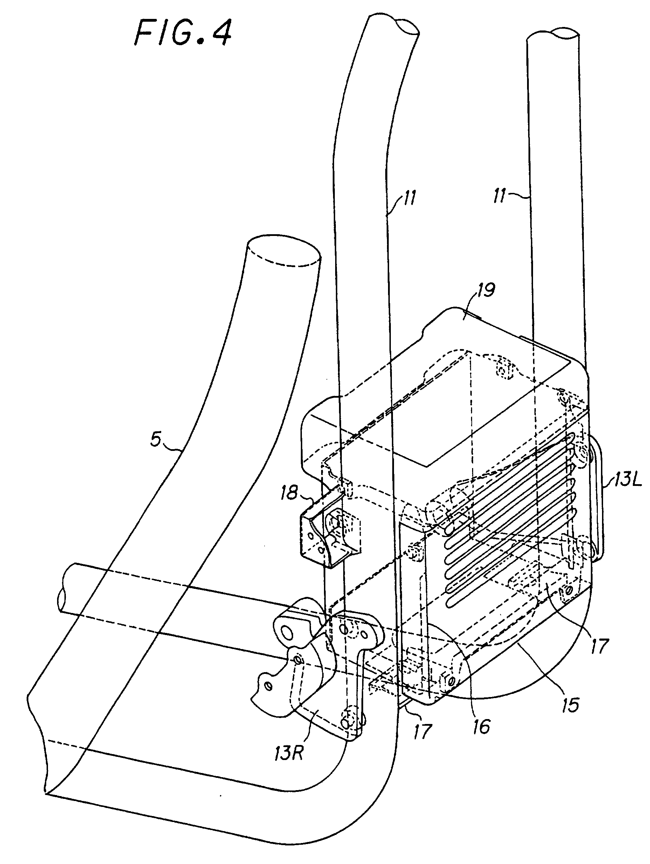

As is explicitly shown in FIG. 4, the front face of the battery holder 15 is sealed with a detachable lid 16, the battery holder 15 is placed and fixed on a channel-shaped supporting material 17 fixed on the lower part of the down pipes 11, and right and left sides thereof are fixed to the down pipes 11 with a coupling member 18 coupled to right and left sides of the battery holder 15. The upper portion of the battery holder 15 is covered with a battery cover 19 made of a resin or the like.

According to the above-mentioned embodiment, by arranging the battery holder 15 between the down pipes 11, 11, the capacity of the fuel tank 2 and the like can be sufficiently secured and the workability of the battery maintenance can be improved.

Moreover, by arranging the battery holder 15 in front of the starter motor 8, the starter motor 8 is protected from pebbles or the like kicked up by the front wheel.

Furthermore, by arranging the battery holder 15 on the top of the oil filter element 7 so as not to superpose them, when seen from the front, the maintenance of the oil filter element 7 can be done without detaching the battery holder 15.

In addition, since the detachable lid 16 is arranged on the front face of the battery holder 15, and there is a space between the lid 16 and a front fender 14, at the time of detaching the lid 16, detaching work can be easily done by means of the forehand space, hence attaching and changing the battery and the inspection work can be easily and conveniently performed.

In the invention of the aspect 1, since the battery holder is arranged on the lower part of the down pipes, a wider space can be secured than the conventional embodiment, immediately under the seat, or downward of the swing arm. Hence, the freedom of layout is increased, and the capacity of the fuel tank and the muffler chamber can be expanded sufficiently, as well as the sitting height of the seat can be lowered.

Furthermore, at the time of maintenance of the battery, since the seat and the body cover do not need to be removed, and the maintenance work can be done in a relatively wide open space at the back of the front wheel which can be steered right and left, the workability is improved.

In the invention of the aspect 2, since the battery holder is arranged in front of the starter motor, the starter motor is protected from pebbles or the like kicked up by the front wheel.

In the invention of the aspect 4, by detaching the lid by utilizing the space between the lid and a front fender, attaching and changing the battery in the battery holder, and the inspection work can be easily and conveniently performed.

## Claims

1. A motorcycle comprising a battery supporting apparatus having a battery holder (15) arranged between a pair of right and left down pipes (11) which hang from the front and upper side of the engine (3) toward the front of the engine case (4) and downward, and an oil filter element (7), **characterized in that** said oil filter element (7) projects forward from the lower part of the engine case (4) and that said battery holder (15) is arranged on the top of said oil filter element at the lower parts of said pair of right and left down pipes (11) between right and left engine suspending plates (13L, 13R).

2. A motorcycle according to claim 1, **characterized in that** said battery holder (15) is arranged in front of a starter motor (8) located on the front part of the engine case (4).

3. A motorcycle according to claim 1 or 2, **characterized in that** said battery holder (15) is arranged beneath a radiator (12) located on the upper part of the down pipe (11).

4. A motorcycle according to claims 1-3, **characterized in that** a detachable lid (16) is arranged on the front face of said battery holder (15).

## Patentansprüche

1. Motorrad aufweisend eine Batterietrageeinrichtung mit einem Batteriehalter (15), der zwischen einem Paar von rechten und linken Abwärtsrohren (11) angeordnet ist, die von der vorderen und oberen Seite des Motors (3) in Richtung der Vorderseite des Motorgehäuses (4) und nach unten aufgehängt sind, und ein Ölfilterelement (7),
**dadurch gekennzeichnet, dass** sich das Ölfilterelement (7) vom unteren Teil des Motorgehäuses (4) nach vorne erstreckt und dass der Batteriehalter (15) oben auf dem Ölfilterelement (7) an den unteren Teilen des Paares von rechten und linken Abwärtsrohren (11) zwischen rechten und linken Motoraufhängeplatten (13L, 13R) angeordnet ist.

2. Motorrad nach Anspruch 1, **dadurch gekennzeichnet, dass** der Batteriehalter (15) vor einem Anlassmotor (8) angeordnet ist, der an dem vorderen Teil des Motorgehäuses (4) angebracht ist.

3. Motorrad nach Anspruch 1 oder 2, **dadurch gekennzeichnet, dass** der Batteriehalter (15) unter einem Kühler (12) angeordnet ist, der an dem oberen Teil der Abwärtsrohres (11) angebracht ist.

4. Motorrad nach einem der Ansprüche 1 bis 3, **dadurch gekennzeichnet, dass** ein abnehmbarer Deckel (16) an der Vorderseite des Batteriehalters (15) angeordnet ist.

## Revendications

1. Motocyclette comprenant un dispositif pour supporter des batteries avec un support de batterie (15) agencé entre une paire de tuyaux de descente droit et gauche (11) qui partent du côté avant supérieur du moteur (3) et descendent en passant devant le carter moteur (4), et un élément de filtre à huile (7), **caractérisée en ce que** ledit élément de filtre à huile (7) fait saillie vers l'avant à partir de la partie inférieure du carter moteur (4) et **en ce que** ledit support de batterie (15) est agencé sur le dessus dudit élément de filtre à huile au niveau des parties inférieures de ladite paire de tuyaux de descente droit et gauche (11) entre les plaques de suspension droite et gauche du moteur (13L, 13R).

2. Motocyclette selon la revendication 1, **caractérisée en ce que** ledit support de batterie (15) est agencé devant un démarreur (8) situé sur la partie avant du carter moteur (4).

3. Motocyclette selon la revendication 1 ou 2, **caractérisée en ce que** ledit support de batterie (15) est agencé au-dessous d'un radiateur (12) situé sur la partie supérieure du tuyau de descente (11).

4. Motocyclette selon les revendications 1 à 3, **caractérisée en ce qu'**un couvercle amovible (16) est agencé sur la face avant dudit support de batterie (15).
